# EUROPEAN PATENT APPLICATION

(11) **EP 4 428 102 A1**
(43) Date of publication of application: **11.09.2024**
(21) Application number: 23220757.1
(22) Date of filing: 29.12.2023
(51) Int. Cl.: C01G 53/00, H01M 4/00

(54) **MANUFACTURING METHOD FOR POSITIVE ELECTRODE ACTIVE MATERIAL AND MANUFACTURING METHOD FOR LITHIUM ION SECONDARY BATTERY**

(30) Priority: 06.03.2023 JP 2023033893
(71) Applicant: Prime Planet Energy & Solutions, Inc., Chuo-ku Tokyo 103-0022 (JP)
(72) Inventor: YAMAMOTO, Yuji, Tokyo, 103-0022 (JP)
(74) Representative: Kuhnen & Wacker Patent- und Rechtsanwaltsbüro PartG mbB

(57) **Abstract**

A manufacturing method disclosed herein includes a preparation step (S1) of preparing nickel hydroxide as a Ni source, the nickel hydroxide having a BET specific surface area of 10 m²/g or more and 30 m²/g or less and a D₅₀ particle diameter of 2 µm or more and 10 µm or less; and a reaction step (S2) of mixing and sintering at least the nickel hydroxide and a Li source to obtain a Ni-containing lithium complex oxide by a solid-phase reaction method.

## Description

### BACKGROUND OF THE DISCLOSURE

### 1. Field

The present disclosure relates to a manufacturing method for a positive electrode active material and a manufacturing method for a lithium ion secondary battery. 2. Background

As lithium ion secondary batteries are being used more widely, there is a growing demand for even higher capacity. In recent years, Ni-containing lithium complex oxides with a higher Ni content have been used as positive electrode active materials from the viewpoint of improving energy density or the like (see, Japanese Patent Application Publication No. 2018-129140, and Japanese Patent Application Publication No. 2000-123836). For example, Japanese Patent Application Publication No. 2018-129140 discloses a manufacturing method for a positive electrode active material, the method including: a pulverizing and mixing step of pulverizing and mixing raw materials to obtain a slurry; a granulating step of spray-drying and granulating the slurry; and a sintering step of sintering the granulated powder obtained (through a solid-phase reaction) to obtain a Ni-containing lithium complex oxide, wherein in the pulverizing and mixing step, a D₅₀ particle diameter of the pulverized raw material powder is finely reduced to 0.1 to 1 µm.

### SUMMARY

According to the findings newly conducted by the inventor, when a product (Ni-containing lithium complex oxide) is obtained using the solid-phase reaction, the properties (particle form) of the raw material significantly affect the properties of the Ni-containing lithium complex oxide, which in turn affects the characteristics of batteries. At this point, the impact of nickel hydroxide as a Ni source becomes particularly significant in a Ni-containing lithium complex oxide with a high Ni content, and therefore its properties are important. However, as described, for example, in Japanese Patent Application Publication No. 2018-129140, it has newly been discovered that when the D₅₀ particle diameter of the raw material powder is finely reduced to 0.1 to 1 µm, a large amount of fine powder is mixed into the nickel-containing lithium complex oxide as a product, and that consequently the cycle characteristics (durability characteristics) of the battery are more prone to deterioration.

The present disclosure has been made in view of the above circumference, and has a main object to provide a manufacturing method for a positive electrode active material that can realize a lithium ion secondary battery with high energy density and excellent cycle characteristics.

The present disclosure provides a manufacturing method for a positive electrode active material including a Ni-containing lithium complex oxide in which the ratio of the atomic weight of Ni to the total atomic weight of metal elements other than Li is 50 atm% or more. The manufacturing method includes a preparation step of preparing powdered nickel hydroxide as a Ni source, the powdered nickel hydroxide having a BET specific surface area of 10 m²/g or more and 30 m²/g or less based on a nitrogen adsorption method and a D₅₀ particle diameter of 2 µm or more and 10 µm or less, the D₅₀ particle diameter corresponding to a cumulative 50 volume% from the smallest particle diameter in a volume-based particle size distribution based on a laser diffraction and scattering method; and a reaction step of mixing and sintering at least the nickel hydroxide and a Li source to obtain a Ni-containing lithium complex oxide by a solid-phase reaction method.

In the manufacturing method disclosed herein, the properties of nickel hydroxide, specifically, the specific surface area and D₅₀ particle diameter, are within respective predetermined ranges. This can suppress the mixing of fine powder into the Ni-containing lithium complex oxide and thus can manufacture the positive electrode active material suitable for use in lithium ion secondary batteries. The manufacturing method can in turn realize a lithium ion secondary battery with high energy density and relatively excellent cycle characteristics.

The present disclosure provides a manufacturing method for a lithium ion secondary battery, the method including a positive electrode production step of producing a positive electrode by using the positive electrode active material manufactured by the aforementioned manufacturing method. With such a configuration, a battery with high energy density and excellent cycle characteristics can be realized.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a longitudinal-sectional view schematically illustrating an internal structure of a lithium ion secondary battery according to one embodiment; and
FIG. 2A shows the frequency distribution of Example 16, and FIG. 2B shows the cumulative distribution of Example 16.

### DETAILED DESCRIPTION OF THE PREFERRED EMBODIMENTS

Some preferred embodiments of the present disclosure will be described below with reference to the drawings as appropriate. Matters other than matters particularly mentioned in the present specification and necessary for the implementation of the present disclosure (for example, the general configuration and manufacturing process of a lithium ion secondary battery that do not characterize the present disclosure) can be grasped as design matters of those skilled in the art based on the prior art in the relevant field. The present disclosure can be implemented on the basis of the contents disclosed in the present specification and common technical knowledge in the relevant field.

It is noted that the term "lithium ion secondary battery" (hereinafter simply referred to as a "battery") in the present specification refers to a power storage device that can be repeatedly charged and discharged by transfer of charges with lithium ions between positive and negative electrodes by using the lithium ions as charge carriers. In the present specification, the notation "A to B" indicative of a range signifies a value more than or equal to A and less than or equal to B, and is meant to encompass also the meaning of being "more than A" and "less than B".

### [Positive electrode active material]

First of all, the positive electrode active material obtained by the manufacturing method mentioned later will be described. The positive electrode active material of the present embodiment contains a Ni-containing lithium complex oxide with a high Ni content (hereinafter referred to as a high Ni content lithium complex oxide) as essential. The high Ni content lithium complex oxide is an example of the "Ni-containing lithium complex oxide in which the ratio of the atomic weight of Ni to the total atomic weight of metal elements other than Li is 50 atm% or more" as disclosed herein.

The high Ni content lithium complex oxide contains Li, Ni, and O as essential elements, and is a compound in which the ratio of the atomic weight of Ni to the total atomic weight of metal elements other than Li is 50 atm% or more from the viewpoint of improving energy density of the battery. The ratio of Ni is preferably 60 atm% or more, more preferably 70 atm% or more, and even more preferably 80 atm% or more. Specific examples of high Ni content lithium complex oxides include lithium-nickel complex oxides, lithium-nickel-cobalt complex oxides, lithium-nickel-manganese complex oxides, lithium-nickel-cobalt-manganese complex oxides, lithium-nickel-cobalt-aluminum complex oxides, lithium-iron-nickel-manganese complex oxides, and the like. These may be used alone or in combination of two or more kinds. In addition to Ni, the high Ni content lithium complex oxide further preferably contains a transition metal element other than Ni, and more preferably contains at least one of Co and Mn. Among these, a lithium-nickel-cobalt-manganese complex oxide containing at least Ni, Co, and Mn as the transition metal elements is preferable because of its excellent battery characteristics including low initial resistance and the like.

It is noted that in the present specification, the term "lithium-nickel-cobalt-manganese complex oxide" encompasses oxides containing Li, Ni, Co, Mn, and O as constituent elements and moreover oxides containing one kind or two or more kinds of additive elements other than those above. Examples of such additive elements include transition metal elements, typical metal elements, and the like, including Mg, Ba, Sr, Ca, Al, Ti, V, Cr, Y, Zr, Nb, Mo, Hf, Ta, W, Na, K, Fe, Cu, Zn, Sn, and the like. The additive element may be a metalloid element such as B, C, Si, or P or a non-metallic element such as S, F, Cl, Br, or I. This similarly applies to the lithium-nickel complex oxides, the lithium-nickel-cobalt complex oxides, the lithium-nickel-manganese complex oxides, the lithium-nickel-cobalt-aluminum complex oxides, the lithium-iron-nickel-manganese complex oxides, and the like described above.

The lithium-nickel-cobalt-manganese complex oxide preferably has a composition expressed by the following Formula (I):

Li₁₊ₓNi_{y}CO_{z}Mn_{(1-y-z)}M_{α}O_{2-β}Q_{β} (I)

In the above Formula (I), x, y, z, α, and β satisfy -0.3 ≤ x ≤ 0.3, 0.5 ≤ y ≤ 0.95, 0.01 ≤ z ≤ 0.3, 0 ≤ α ≤ 0.1, and 0 ≤ β ≤ 0.5, respectively, M represents at least one kind of element selected from the group consisting of Al, Zr, B, Mg, Fe, Cu, Zn, Sn, Na, K, Ba, Sr, Ca, W, Mo, Nb, Ti, and Si, and Q represents at least one kind of element selected from the group consisting of F, Cl, and Br.

X satisfies preferably 0 ≤ x ≤ 0.3, more preferably 0 ≤ x ≤ 0.15, and even more preferably 0 ≤ x ≤ 0.05. From the viewpoint of balancing the high energy density and the excellent cycle characteristics, y satisfies preferably 0.6 ≤ y ≤ 0.95, and for example, 0.7 ≤ y ≤ 0.9, or 0.8 ≤ y ≤ 0.9, and z satisfies preferably 0.03 ≤ z ≤ 0.25 and more preferably 0.10 ≤ z ≤ 0.2. In addition, α satisfies preferably 0 ≤ α ≤ 0.05 and is more preferably 0. Furthermore, β satisfies preferably 0 ≤ β ≤ 0.1 and is more preferably 0.

The high Ni content lithium complex oxide preferably has a layered rock salt-type crystal structure. Examples of lithium complex oxides having such a crystal structure include lithium nickel cobalt manganese complex oxides and lithium nickel cobalt aluminum complex oxides. However, the crystal structure of the high Ni content lithium complex oxide may be a spinel structure or the like. The crystal structure can be confirmed by an X-ray diffraction method or the like.

The high Ni content lithium complex typically has a substantially spherical shape. However, it may also have an irregular shape or the like. It is noted that in the present specification, the term "substantially spherical shape" means a shape that can be regarded as being generally spherical as a whole and that has an average aspect ratio (major axis/minor axis ratio) of generally 1 to 2, and for example, 1 to 1.5 in a cross-sectional observation image with an electron microscope. The high Ni content lithium complex oxide is typical in the form of secondary particles in which primary particles are aggregated by a physical or chemical bonding force. In other words, the high Ni content lithium complex oxide (i.e., secondary particles) is an aggregate of primary particles in which a number of primary particles are aggregated to form a single particle.

The high Ni content lithium complex is typically in a powdered form. The D₅₀ particle diameter (average particle diameter) of the high Ni content lithium complex oxide is not particularly limited, but it may be generally 25 µm or less, and in one embodiment is 0.05 to 25 µm, and preferably 10 to 20 µm from the viewpoint of improving the battery characteristic (e.g., energy density or output characteristic). It is noted that in the present specification, the term "D₅₀ particle diameter (average particle diameter)" means the particle diameter (median diameter) corresponding to the cumulative 50 volume% from the smallest particle diameter (microparticle side) in the volume-based particle size distribution (cumulative distribution) based on a laser diffraction and scattering method.

The D₂₀ particle diameter of the high Ni content lithium complex oxide is not particularly
limited, but may be generally 20 µm or less, and in one embodiment, it is 5 to 15 µm, and preferably 6 to 14 µm. The D₁₀ particle diameter of the high Ni content lithium complex oxide is not particularly limited, but may be generally 3 µm or less, and in one embodiment, it is 0.1 to 2 µm, and preferably 0.6 to 1.4 µm. By suppressing the mixing of fine powder in this way, a battery with excellent cycle characteristics can be realized. In the present specification, the terms "D₂₀ particle diameter" and "D₁₀ particle diameter" mean the particle diameters corresponding to the cumulative 20 volume% and 10 volume%, respectively, from the smallest particle diameter (microparticle side) in the volume-based particle size distribution (cumulative distribution) based on a laser diffraction and scattering method.

### [Manufacturing method for positive electrode active material]

Next, the manufacturing method for a positive electrode active material described above will be described. The manufacturing method for the positive electrode active material according to the present embodiment includes a preparation step S1 of preparing nickel hydroxide and a reaction step S2 of obtaining a high Ni content lithium complex oxide (product), in this order. The manufacturing method disclosed herein may further include other steps at any stage.

The preparation step S1 is a step of preparing nickel hydroxide serving as a Ni source of the high Ni content lithium complex oxide. The above nickel hydroxide is in a powdered form. According to the new insights gained by the inventor, when a product is obtained using the solid-phase reaction, the properties (particle form) of nickel hydroxide serving as the Ni source influence the properties of the Ni-containing lithium complex oxide, which in turn affects the cycle characteristics of batteries. In the high Ni content lithium complex oxide with a high Ni content, which is 50 atm% or more, the influence of nickel hydroxide as the Ni source becomes particularly significant. Therefore, in order to manufacture a high Ni content lithium complex oxide suitable for use in batteries, it is important to adjust the properties of nickel hydroxide.

In the manufacturing method disclosed herein, the nickel hydroxide is prepared so that it satisfies both of the following conditions: (1) the BET specific surface area is 10 to 30 m²/g; and (2) the D₅₀ particle diameter is 2 to 10 µm. As described in later examples as well, this can suppress the mixing of fine powder into the high Ni content lithium complex oxide, compared to when using, for example, nickel hydroxide that does not satisfy the above BET specific surface area range or nickel hydroxide that does not satisfy the above D₅₀ particle diameter range, thereby realizing a battery with relatively excellent cycle characteristics. It is noted that nickel hydroxide with the above properties can be prepared, for example, by purchasing commercially available reagents or by pulverizing and classifying commercially available reagents as appropriate. For example, a ball mill can be used for the pulverization.
(1) The appropriate BET specific surface area of nickel hydroxide is 10 to 30 m²/g. If the BET specific surface area is lower than this range, the particles of nickel hydroxide may become too large and thus may not adhere or bond well to each other in the reaction step S2 described below. Consequently, a large amount of fine powder may be mixed into the resulting high Ni content lithium complex oxide. As a result, the cycle characteristics tend to deteriorate. On the other hand, if the BET specific surface area is higher than this range, for example, the particles of nickel hydroxide may become too small, and a large amount of fine powder may remain in the resulting high Ni content lithium complex oxide. Also in this case, the cycle characteristics of the battery tend to deteriorate.

The BET specific surface area of nickel hydroxide may be, for example, 15 m²/g or more, 25 m²/g or less, or 20 m²/g or less. In the present specification, the term "BET specific surface area" refers to a value obtained by analyzing the surface area that has been measured by a nitrogen adsorption method, by using a BET method.

(2) The appropriate D₅₀ particle diameter of nickel hydroxide is 2 to 10 µm. If the D₅₀ particle diameter is smaller than this range (e.g., 0.1 to 1 µm, as disclosed in Japanese Patent Application Publication No. 2018-129140), a large amount of fine powder may remain in the resulting high Ni content lithium complex oxide. As a result, the cycle characteristics tend to deteriorate. On the other hand, if the D₅₀ particle diameter is larger than this range, the particles may not adhere or bond well to each other in the reaction step S2 described below. Also in this case, the cycle characteristics tend to deteriorate.

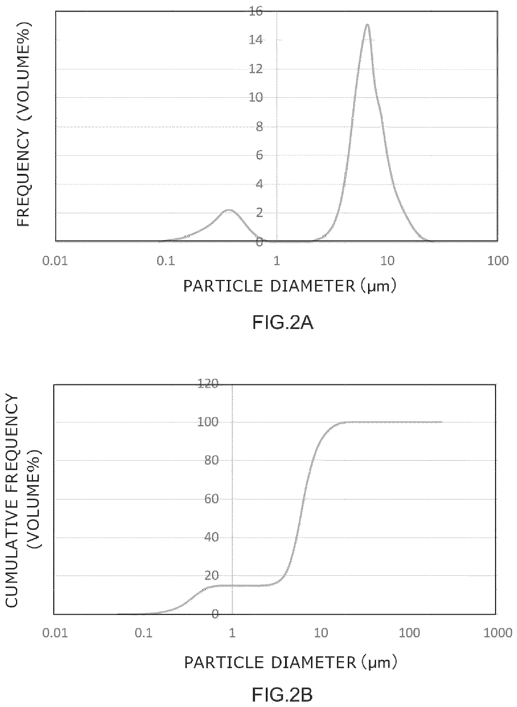

The D₅₀ particle diameter of nickel hydroxide may be, for example, 3 µm or more, 8 µm or less, or 5 µm or less. It is noted that the term "D₅₀ particle diameter" refers to the particle diameter (median diameter), which corresponds to the cumulative 50 volume% in the volume-based particle size distribution (cumulative distribution) based on the laser diffraction and scattering method as described above. The cumulative distribution is represented, for example, by a graph with the horizontal axis as the particle diameter (µm) and the vertical axis as the cumulative frequency (volume%), as shown in FIG. 2B.

In one preferred embodiment, nickel hydroxide that satisfies the condition (3), in which the mode diameter is larger than the D₅₀ particle diameter (i.e., D₅₀ particle diameter < mode diameter), is used. Thus, a battery with more excellent cycle characteristics can be realized, compared to when using nickel hydroxide that does not satisfy the above size relationship, for example, as described in Examples below. The mode diameter of nickel hydroxide is preferably 1.9 to 10 µm, and more preferably 5 to 8 µm.

It is noted that in the present specification, the term "mode diameter" refers to the particle diameter with the highest frequency (most frequent particle diameter) in the volume-based particle size distribution (frequency distribution) based on the laser diffraction and scattering method. The frequency distribution is represented, for example, by a graph with the horizontal axis as the particle diameter (µm) and the vertical axis as the frequency (volume%) as shown in FIG. 2A. It is noted that the frequency distribution represents the proportion of particle quantity per particle diameter range, thus resulting in a histogram display with width. In that case, the median of the width is defined as the mode diameter.

In another preferred embodiment, nickel hydroxide is used that satisfies both of the following conditions: (4) the frequency of the mode diameter is 10 to 20 volume%; and (5) the ratio of the D₅₀ particle diameter to the D₂₀ particle diameter is 1.1 to 1.9. It is noted that in the present specification, the term "ratio (D₅₀ particle diameter/D₂₀ particle diameter)" refers to the ratio of the D₅₀ particle diameter to the D₂₀ particle diameter in the volume-based particle size distribution (cumulative distribution) based on the laser diffraction and scattering method. The frequency of the mode diameter and the above ratio (D₅₀ particle diameter/D₂₀ particle diameter) can be one index representing the spread of the particle size distribution. The frequency of the mode diameters being less than or equal to a predetermined value and the above ratio (D₅₀ particle diameter/D₂₀ particle diameter) being greater than or equal to a predetermined value can mean that the particle size distribution has a predetermined width.

By using nickel hydroxide that satisfies both of the conditions (4) and (5) above, the balance between the generation of fine powder and adhesion can be optimized, further suppressing the mixing of fine powder into the high Ni content lithium complex oxide. Thus, as described in Examples below, a battery with more excellent cycle characteristics can be realized, compared to when using, for example, nickel hydroxide that does not satisfy the above mode diameter range or nickel hydroxide that does not satisfy the above range of the ratio (D₅₀ particle diameter/D₂₀ particle diameter). The frequency of the mode diameter is more preferable 12 volume% or more, and more preferably 17 volume% or less. The above ratio (D₅₀ particle diameter/D₂₀ particle diameter) is more preferably 1.3 or more, and more preferably 1.5 or less.

Nickel hydroxide is typically in the form of secondary particles composed of a plurality of primary particles aggregated by a physical or chemical bonding force. In other words, nickel hydroxide (i.e., secondary particles) is an aggregate of primary particles in which a number of primary particles are aggregated to form a single particle.

The reaction step S2 utilizes the solid-phase reaction method, and is a step of mixing at least the powdered nickel hydroxide (Ni source) prepared in the above preparation step S 1 and a Li source and then sintering them to thereby obtain a Ni-containing lithium complex oxide. The solid-phase reaction method is a method of synthesizing a target material by weighing powdered raw materials of compounds (e.g., a carbonate, a hydroxide, etc.) containing the required elements so as to have a predetermined composition ratio, mixing them, and then sintering them.

The mixing method is not particularly limited, and conventionally known dry-mixing methods or wet mixing methods can be employed. The mixing can be performed, for example, with a ball mill, jet mill, planetary mixer, disperser, mortar, or the like.

In the first embodiment, the reaction step S2 includes a mixture preparation step of obtaining the mixture by the dry-mixing method and a sintering step of obtaining the high Ni content lithium complex oxide by sintering the mixture, in this order. The dry-mixing method, which does not use a solvent, is simple and leads to reduction in manufacturing costs. It also reduces environmental impact. In the following, the case of obtaining a lithium nickel cobalt manganese complex oxide will be specifically described as one example of the Ni-containing lithium complex oxide.

The mixture preparation step is a step of dry-mixing at least nickel hydroxide as a Ni source and a Li source to obtain the mixture as a metal element source. Here, in this step, at least nickel hydroxide as a Ni source, a Li source, a Co source, and a Mn source are dry-mixed to obtain a mixture. The order of mixing these elements is not particularly limited, but for example, the mixture may be prepared in two stages, specifically, by first mixing transition metal element sources (Ni source, Co source, and Mn source) to prepare a preliminary mixture, and then adding a Li source to the preliminary mixture and mixing them.

The metal element sources other than the Ni source (Li source, Co source, and Mn source) may be compounds such as carbonates, hydroxides, nitrates, sulfates, and oxalates. Among them, carbonates are preferable. The metal element sources other than the Ni source (Li source, Co source, and Mn source) are typically in a powdered form. The mixing ratio of the metal element sources including the Ni source should be determined, for example, such that x, y, and z in the above formula (I) become the desired values. This results in a mixture containing all the metal elements (i.e., Li, Ni, Co, and Mn in the case of the lithium nickel cobalt manganese complex oxide) contained in the high Ni content lithium complex oxide. The mixture is typically in a powdered form. The mixture may further contain, for example, an M element source or a Q element source in the formula (I) described above.

The sintering step is a step of sintering the mixture obtained in the above mixture preparation step. The sintering conditions may be the same as those in the related art and can be adjusted as appropriate depending on, for example, the properties of the mixture and the like. Although not particularly limited, the sintering temperature may be generally 650°C or higher, preferably 700°C or higher, 750°C or higher, and for example 800°C or higher, and it may be generally 1000°C or lower, and for example, 900°C or lower. The sintering time may be generally 2 to 24 hours, and preferably 5 to 12 hours. The temperature rising speed may be, for example, 5 to 40 °C /min. The sintering atmosphere is preferably an oxygen-containing atmosphere, for example, an oxygen atmosphere or an atmospheric atmosphere. In the first embodiment, the high Ni content lithium complex oxide can be obtained in this way.

In the second embodiment, the reaction step S2 includes a slurry preparation step of preparing a slurry, a granulating step of spray-drying the slurry to obtain a granulated powder, and a sintering step of sintering the granulated powder, in this order. Once the granulated powder is produced, it is then sintered, which improves the dispersibility and homogeneity of the powdered material (metal element source), and thereby the particles adhere or bond to each other more easily. As a result, the mixing of fine powder into the high Ni content lithium complex oxide can be further suppressed. Thus, the cycle characteristics of the battery can be further improved.

The slurry preparation step is a step of dispersing at least nickel hydroxide as a Ni source and a Li source as the metal element sources in a solvent to prepare the slurry (suspension). Here, this step is a step of preparing the slurry by dispersing at least nickel hydroxide as the Ni source, the Li source, a Co source, and a Mn source in the solvent. The metal element sources other than the Ni source (Li source, Co source, and Mn source) and the mixing ratio may be the same as those in the mixture preparation step of the first embodiment described above. The solvent is typically water, but may be a water-based mixed solvent. Examples of solvents other than water that is usable to constitute the mixed solvent include organic solvents that can be homogeneously mixed with water, such as lower alcohols and lower ketones. The property (viscosity) of the slurry is preferably adjusted as appropriate to suit a spray granulation method, as described, for example, in Japanese Patent Application Publication No. 2018-129140.

The granulating step is a step of obtaining granulated powder from the slurry by using the spray granulation method (spray drying method). Specifically, the above slurry is sprayed in a dry atmosphere and dried to thereby carry out granulation to produce (form) a plurality of granulated particles. In this method, the particles contained in a sprayed droplet are generally granulated into a single mass. According to the studies conducted by the inventors, particularly for the use of the spray granulation method, if the D₅₀ particle diameter of the raw material is too small, a large amount of fine powder may be mixed into the resulting high Ni content lithium complex oxide, and the cycle characteristics are more prone to deterioration. Therefore, it is particularly effective to apply the technology disclosed here. The conditions for the granulation and the D₅₀ particle diameter of the granulated powder can be the same as those in the related art, and can be further adjusted as appropriate depending on the properties of the slurry and the like. This can suitably obtain a granulated powder in which all metallic elements typically contained in the high Ni content lithium complex oxide (i.e., Li, Ni, Co, and Mn in the case of the lithium nickel cobalt manganese complex oxide) are contained in each granulated particle.

In the second embodiment, the spray granulation method is employed as the method of granulation, but in other embodiments, other conventionally known granulation methods, such as a rolling granulation method, a fluidized bed granulation method, an agitation granulation method, a compression granulation method, an extrusion granulation method, and a crushing granulation method, can also be employed.

The sintering step is a step of sintering the granulated powder obtained in the above granulating step. The sintering conditions may be the same as those in the mixture preparation step of the first embodiment described above, and can be further adjusted as appropriate depending on the properties of the granulated powder and the like. In the second embodiment, the high Ni content lithium complex oxide can be obtained in this way.

### [Lithium ion secondary battery]

The positive electrode active material obtained by the above manufacturing method is suitable for use in lithium ion secondary batteries because the mixing of fine powder is suppressed. Therefore, the lithium ion secondary battery containing the positive electrode active material has excellent cycle characteristics and can maintain high energy density for a long period of time.

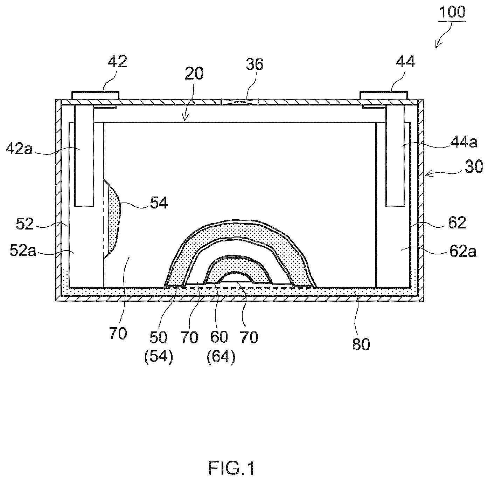

FIG. 1 is a longitudinal sectional view schematically illustrating an internal structure of a lithium ion secondary battery 100 according to one embodiment. In the figures below, members and portions having the same action are labeled with the same reference signs, and a duplicate description thereof may be omitted or simplified. The lithium ion secondary battery 100 illustrated in FIG. 1 is a rectangular battery in which a flat electrode body 20 and a nonaqueous electrolyte 80 are housed and sealed within a flat and rectangular battery case 30. Note that FIG. 1 illustrates one example, and the lithium ion secondary battery 100 is not limited to the illustrated example. The lithium ion secondary battery may be of a coin type, a button type, a cylindrical type, a laminate case type, or the like in other embodiments.

The battery case 30 is an exterior container for housing the electrode body 20 and the nonaqueous electrolyte 80. As the material of the battery case 30, for example, a metal material with a light weight and high thermal conductivity, such as aluminum, is used. On an outer surface of the battery case 30, there are provided a positive electrode terminal 42 and a negative electrode terminal 44 for external connection, and a thin safe valve 36. The safe valve 36 is set to release internal pressure from the battery case 30 when it reaches or exceeds a predetermined level. The positive electrode terminal 42 is electrically connected to a positive electrode current collection plate 42a, and the negative electrode terminal 44 is electrically connected to a negative electrode current collection plate 44a.

Here, the electrode body 20 is a wound electrode body in which a positive electrode sheet 50 and a negative electrode sheet 60 are overlapped on each other across two separator sheets 70 with a band shape and wound in a longitudinal direction. In other embodiments, however, the electrode body may be a stack type electrode body formed in a manner that a rectangular positive electrode and a rectangular negative electrode are stacked across a rectangular separator. The positive electrode sheet 50 has a structure in which a positive electrode active material layer 54 is formed along the longitudinal direction on one surface or both surfaces (here, both surfaces) of a positive electrode current collector 52 with a band shape as illustrated in a partially ruptured view of FIG. 1. The negative electrode sheet 60 has a structure in which a negative electrode active material layer 64 is formed along the longitudinal direction on one surface or both surfaces (here, both surfaces) of a negative electrode current collector 62 with a band shape.

At both ends of the electrode body 20 in a winding axis direction (that is, the width direction orthogonal to the longitudinal direction), a positive electrode active material layer non-formation part 52a and a negative electrode active material layer non-formation part 62a are formed to protrude outward. In the positive electrode active material layer non-formation part 52a, the positive electrode active material layer 54 is not formed and the positive electrode current collector 52 is exposed. Similarly, in the negative electrode active material layer non-formation part 62a, the negative electrode active material layer 64 is not formed and the negative electrode current collector 62 is exposed. Each of the positive electrode active material layer non-formation part 52a and the negative electrode active material layer non-formation part 62a functions as a current collection part. The positive electrode active material layer non-formation part 52a and the negative electrode active material layer non-formation part 62a include the positive electrode current collection plate 42a and the negative electrode current collection plate 44a, respectively. It is noted that the shape of the positive electrode active material layer non-formation part 52a and the negative electrode active material layer non-formation part 62a is not limited to the shape of the example illustrated in the figures. Each of the positive electrode active material layer non-formation part 52a and the negative electrode active material layer non-formation part 62a may be formed as a current collection tab that is processed into a predetermined shape.

The positive electrode current collector 52 here has a band shape. The positive electrode current collector 52 is preferably made of metal, and more preferably constituted of a metal foil. The positive electrode current collector 52 is an aluminum foil here. The positive electrode active material layer 54 includes at least the positive electrode active material (high Ni content lithium complex oxide) manufactured by the manufacturing method disclosed herein. The positive electrode active material layer 54 may further include a positive electrode active material of the kind other than the aforementioned positive electrode active material manufactured by the manufacturing method disclosed herein. When the entire positive electrode active material included in the positive electrode active material layer 54 is assumed to be 100 mass%, the ratio of the aforementioned positive electrode active material manufactured by the manufacturing method disclosed herein may be generally 50 mass% or more, preferably 60 mass% or more, more preferably 80 mass% or more, and for example, 85 to 100 mass%. Thus, the effect of the art disclosed herein can be exhibited at the high level.

The positive electrode active material layer 54 may additionally include an additive component other than the positive electrode active material. Examples of the additive component include a conductive material, a binder, trilithium phosphate, and the like. Examples of the conductive material include carbon black such as acetylene black (AB) and carbon materials such as graphite. Examples of the binder include fluorine resins such as polyvinylidene fluoride (PVdF).

When the amount of the entire positive electrode active material layer 54 is assumed to be 100 mass%, the proportion of the positive electrode active material is preferably 70 mass% or more, more preferably 80 to 99 mass%, and even more preferably 85 to 98 mass%, without particular limitations. The proportion of the conductive material is preferably 0.5 to 15 mass%, for example 1 to 10 mass%, and more preferably 1 to 5 mass%. The proportion of the binder is preferably 0.5 to 15 mass%, for example 0.8 to 10 mass%, and more preferably 1 to 5 mass%.

The negative electrode current collector 62 here has a band shape. The negative electrode current collector 62 is preferably made of metal, and more preferably constituted of a metal foil. The negative electrode current collector 62 is a copper foil here. The negative electrode active material layer 64 includes a negative electrode active material. As the negative electrode active material, for example, a carbon material such as graphite, hard carbon, or soft carbon can be used. The negative electrode active material layer 64 may include an additive component other than the negative electrode active material. Examples of the additive component include a binder, a thickener, and the like. Examples of the binder include rubbers such as styrene butadiene rubber (SBR) and fluorine resins such as polyvinylidene fluoride (PVdF). Examples of the thickener include celluloses such as carboxymethyl cellulose (CMC).

The separator sheet 70 here has a band shape. The separator sheet 70 may be, for example, a porous sheet (film) made of resin such as polyethylene (PE), polypropylene (PP), or polyester. Such a porous sheet may have a single-layer structure or a multilayer structure of two or more layers (for example, three-layer structure in which a PP layer is stacked on each surface of a PE layer). The separator sheet 70 may have a heat-resistant layer (HRL) on a surface thereof.

The nonaqueous electrolyte 80 is typically a nonaqueous electrolyte solution containing a nonaqueous solvent and a supporting salt (electrolyte salt). In another embodiment, however, the nonaqueous electrolyte 80 may be a polymer electrolyte. As the nonaqueous solvent, organic solvents including carbonates, ethers, esters, and the like that are usable for electrolyte solutions of general lithium ion secondary batteries can be used alone or in combination of two or more kinds. Specific examples include ethylene carbonate (EC), propylene carbonate (PC), diethyl carbonate (DEC), dimethyl carbonate (DMC), ethyl methyl carbonate (EMC), and the like. Examples of the supporting salt include lithium salts such as LiPF₆ and LiBF₄.

Such a lithium ion secondary battery 100 can be manufactured by the manufacturing method, which includes a positive electrode production step of producing the positive electrode sheet 50 by using the positive electrode active material (high Ni content lithium complex oxide) manufactured by the aforesaid manufacturing method.

The lithium ion secondary battery 100 is usable in various applications, and for example, can be suitably used as a power source for a motor (power source for driving) that is mounted in a vehicle such as a passenger car or a truck because of the high energy density and the excellent cycle characteristics. The vehicle is not limited to a particular type, and may be, for example, a plug-in hybrid electric vehicle (PHEV), a hybrid electric vehicle (HEV), or a battery electric vehicle (BEV).

Several examples relating to the present disclosure will now be described, but the present disclosure is not intended to be limited to these examples.

### <Preparation of nickel hydroxide>

In Comparative Examples 1 to 4 and Examples 1 to 24, commercially available nickel hydroxide (in the form of secondary particles) was first prepared as the pulverization raw material. The properties of nickel hydroxide (especially, BET specific surface area and particle size distribution) were adjusted by pulverizing the prepared raw material in a ball mill and varying the ball diameter, rotation speed, and pulverization time of the ball mill during this process. Specifically, when increasing the BET specific surface area or decreasing the D₅₀ particle diameter, the rotation speed was increased, the pulverization time was increased, or the ball diameter was decreased. For a wider particle size distribution, the rotation speed was decreased or the pulverization time was shortened. Furthermore, a dry classifier was used to adjust the particle size distribution (specifically, the maximum particle diameter) through the adjustment of the classification point, and nickel hydroxides with different properties (Comparative Examples 1 to 4 and Examples 1 to 24) were prepared.

### <Measurement of properties of nickel hydroxide>

·BET Specific Surface Area: The BET specific surface area of nickel hydroxide in each example was measured by a constant-volume adsorption method using a specific surface area and pore size analyzer, which is commercially available, with nitrogen as adsorbent gas. The results are shown in Table 1.
·Particle size distribution: First, a laser diffraction and scattering particle size distribution measurement apparatus (model LA-950, manufactured by HORIBA, Ltd.), which is commercially available, was prepared, and each sample (nickel hydroxide) and pure water (solvent) were put into a measurement cell. Next, the measurement cell was pretreated by irradiating it with ultrasonic waves for 4 minutes, and then subjected to measurement in a transmission mode with a refractive index of 1.240-0 in the water solvent (refractive index 1.333). The D₅₀ particle diameter (median diameter), the mode diameter and its frequency, and the ratio (D₅₀ particle diameter/D₂₀ particle diameter) of the D₅₀ particle diameter to the D₂₀ particle diameter were then calculated using the accompanying analysis software. The results are shown in Table 1. As representative examples, FIG. 2A shows the frequency distribution of Example 16, and FIG. 2B shows the cumulative distribution of Example 16. The frequency distribution is shown here with a particle size width of 1 µm.

### <Preparation of positive electrode active material>

In Comparative Examples 1 to 4 and Examples 1 to 23, mixtures were prepared by the dry-mixing method, and the resulting mixtures were reacted by the solid-phase reaction method. Specifically, powdered nickel hydroxide (Ni source) obtained after the particle size adjustment, CoCOs (Co source), and MnCO₃ (Mn source) were first premixed, and Li₂CO₃ (Li source) was then added to the resulting premixture, followed by mixing them to obtain a mixture. The ratio of the atomic weight of Ni to the total atomic weight of the metal elements (Ni + Co + Mn) other than Li was set to the value shown in Table 1. The ratio (Li/transition metal ratio) of the atomic weight of Li to the total atomic weight of the transition metal elements (Ni + Co + Mn) was 1.05 atm%. Thereafter, the resulting mixture was then sintered at 900°C for 10 hours in an oxygen atmosphere. As a result, a high Ni content lithium complex oxide (positive electrode active material) was obtained.

In Example 24, granulated powder was obtained by utilizing the spray granulation method, and the resulting granulated powder was reacted by the solid-phase reaction method. Specifically, powdered nickel hydroxide (Ni source) obtained after the particle size adjustment, CoCOs (Co source), and MnCO₃ (Mn source) were first premixed, and Li₂CO₃ (Li source) was then added to the resulting premixture, followed by mixing them to obtain a mixture. The ratio of the atomic weight of Ni to the total atomic weight of the metal elements (Ni + Co + Mn) other than Li was set to the value shown in Table 1. The ratio (Li/transition metal ratio) of the atomic weight of Li to the total atomic weight of the transition metal elements (Ni + Co + Mn) was set to 1.05 atm%. Then, the resulting mixture was dispersed in water to prepare a slurry. The slurry is sprayed in a dry atmosphere and dried to thereby carry out granulation, so that granulated powder was obtained. Thereafter, the resulting granulated powder was sintered at 900°C for 10 hours in an oxygen atmosphere. As a result, a high Ni content lithium complex oxide (positive electrode active material) was obtained.

### <Production of lithium ion secondary battery for evaluation>

The positive electrode active material (high Ni content lithium complex oxide) obtained as described above, acetylene black (AB) as the conductive material, and polyvinylidene fluoride (PVdF) as the binder were mixed in a mass ratio of positive electrode active material : AB : PVdF = 85 : 10 : 5, followed by adding an appropriate amount of N-methyl-2-pyrrolidone (NMP) thereto, whereby a slurry for positive electrode active material layer formation was prepared. Next, this slurry for the positive electrode active material layer formation was applied on the surfaces of an aluminum foil (positive electrode current collector) and dried, so that the positive electrode sheet was produced.

In addition, graphite (C) as the negative electrode active material, styrene butadiene rubber (SBR) as the binder, and carboxyl methyl cellulose (CMC) as the thickener were mixed in a mass ratio of C : SBR : CMC = 98 : 1 : 1, followed by addition of an appropriate amount of an ion exchanged water thereto, thus producing a slurry for negative electrode active material layer formation. This slurry for the negative electrode active material layer formation was applied on the surfaces of a copper foil (negative electrode current collector) and dried, so that the negative electrode sheet was produced.

As the separator, a porous polyolefin sheet with a three-layer structure of PP/PE/PP was prepared. Next, the positive electrode sheet and the negative electrode sheet were overlapped on each other with the separator therebetween, whereby the electrode body was produced. Next, electrode terminals were attached to the electrode body, which was then inserted into the battery case, and the nonaqueous electrolyte solution was injected thereinto. It is noted that the nonaqueous electrolyte solution used was a solution in which LiPF₆ as the supporting salt was dissolved at a concentration of 1 mol/L in a mixed solvent including ethylene carbonate (EC), dimethyl carbonate (DMC), and ethyl methyl carbonate (EMC) in a volume ratio of EC : DMC : EMC = 30 : 40 : 30. Thereafter, the battery case was sealed, whereby a lithium ion secondary battery for evaluation according to each example was produced.

### <Activation process of lithium ion secondary battery>

First, the lithium ion secondary battery for evaluation according to each example was subjected to an activation process. Specifically, each lithium ion secondary battery for the evaluation was charged at a constant current to 4.2 V at a charge rate of 0.1 C. Subsequently, it was charged at a constant voltage until the current value reached 1/50 C, achieving a fully charged state (SOC of 100%). Thereafter, each lithium ion secondary battery for the evaluation was discharged at a constant current to 3.0 V at a discharge rate of 0.1 C.

### <Measurement of initial resistance>

Each activated lithium ion secondary battery for the evaluation was adjusted to be in the state of an SOC of 50%. The battery was then discharged at a current value of 100mA for 10 seconds under an environment of 25°C, and a voltage drop ΔV was determined. The voltage drop ΔV was divided by the discharge current value (100 mA) to calculate a battery resistance, which was used as the initial resistance.

### <Measurement of rate of increase in resistance>

Each lithium ion secondary battery for the evaluation was placed in an environment of 60°C, charged at a constant current to 4.1 V at a charge rate of 1 C, and then discharged at a constant current to 3.0 V at a discharge rate of 1 C. This charge-discharge cycle, considered as one cycle, was then repeated for a total of 200 cycles. After completing 200 cycles, the battery resistance was then measured in the same way as the initial resistance, and the rate of increase in the resistance (%) after the cycles was calculated by the following formula: (battery resistance after 200 cycles/initial resistance) × 100. The results are shown in Table 1.

### [Table 1]

**Table1**

| | Ni/ (Ni+Co+Mn) ATOMIC WEIGHT RATIO (ATM%) | PROPERTIES OF NICKEL HYDROXIDE AS NI SOURCE | | | | | RATE OF INCREASE IN RESISTANCE AFTER CYCLES (INITIAL RATIO) (%) |
|---|---|---|---|---|---|---|---|
| | | BET SPECIFIC SURFACE AREA (M²/G) | PARTICLE SIZE DISTRIBUTION | | | | |
| | | | D_{50 PARTICLE DIAMETER}(*µ*m) | MOST FREQUENT PARTICLE | | D₅₀/D₂₀ | |
| | | | | FREQUENCY (VOLUME%) | MODE DIAMETER(*µ*m) | | |
| COMPARATIVE EXAMPLE 1 | 45 | 20 | 5 | 30 | 5 | 2 | 300 |
| COMPARATIVE EXAMPLE 2 | 80 | 5 | 5 | 30 | 5 | 2 | 300 |
| COMPARATIVE EXAMPLE 3 | 80 | 40 | 5 | 30 | 5 | 2 | 300 |
| COMPARATIVE EXAMPLE 4 | 80 | 20 | 1 | 30 | 1 | 2 | 300 |
| COMPARATIVE EXAMPLE 5 | 80 | 20 | 13 | 30 | 13 | 2 | 300 |
| EXAMPLE 1 | 50 | 20 | 5 | 30 | 5 | 2 | 250 |
| EXAMPLE 2 | 60 | 20 | 5 | 30 | 5 | 2 | 220 |
| EXAMPLE 3 | 80 | 20 | 5 | 30 | 5 | 2 | 200 |
| EXAMPLE 4 | 100 | 20 | 5 | 30 | 5 | 2 | 280 |
| EXAMPLE 5 | 80 | 30 | 5 | 30 | 5 | 2 | 220 |
| EXAMPLE 6 | 80 | 10 | 5 | 30 | 5 | 2 | 220 |
| EXAMPLE 7 | 80 | 20 | 2 | 30 | 1.9 | 2 | 220 |
| EXAMPLE 8 | 80 | 20 | 10 | 30 | 10 | 2 | 220 |
| EXAMPLE 9 | 80 | 20 | 5 | 20 | 5.5 | 2 | 200 |
| EXAMPLE 10 | 80 | 20 | 5 | 10 | 6.5 | 2 | 200 |
| EXAMPLE 11 | 80 | 20 | 5 | 5 | 7.1 | 2 | 200 |
| EXAMPLE 12 | 80 | 20 | 5 | 20 | 5.5 | 1.9 | 180 |
| EXAMPLE 13 | 80 | 20 | 5 | 20 | 5.5 | 1.5 | 150 |
| EXAMPLE 14 | 80 | 20 | 5 | 20 | 5.5 | 1.1 | 180 |
| EXAMPLE 15 | 80 | 20 | 5 | 15 | 6 | 1.9 | 150 |
| EXAMPLE 16 | 80 | 20 | 5 | 15 | 6 | 1.5 | 130 |
| EXAMPLE 17 | 80 | 20 | 5 | 15 | 6 | 1.1 | 150 |
| EXAMPLE 18 | 80 | 20 | 5 | 10 | 6.5 | 1.9 | 180 |
| EXAMPLE 19 | 80 | 20 | 5 | 10 | 6.5 | 1.5 | 150 |
| EXAMPLE 20 | 80 | 20 | 5 | 10 | 6.5 | 1.1 | 180 |
| EXAMPLE 21 | 80 | 20 | 5 | 5 | 7.1 | 1.9 | 200 |
| EXAMPLE 22 | 80 | 20 | 5 | 5 | 7.1 | 1.5 | 200 |
| EXAMPLE 23 | 80 | 20 | 5 | 5 | 7.1 | 1.1 | 200 |
| EXAMPLE 24 | 80 | 20 | 5 | 15 | 6 | 1.5 | 120 |

As can be seen from the results of Table 1, in Comparative Examples 2 and 3 that used nickel hydroxide having a BET specific surface area of less than 10 m²/g, or more than 30 m²/g in the preparation step, and Comparative Examples 4 and 5 that used nickel hydroxide having a D₅₀ particle diameter of less than 2 µm or of more than 10 µm in the preparation step, the rate of increase in the resistance after the cycles was relatively high. The reason for this is thought to be that in Comparative Example 2 where nickel hydroxide had a BET specific surface area of less than 10 m²/g (specifically, 5 m²/g) and Comparative Example 5 where nickel hydroxide had a D₅₀ particle diameter of more than 10 µm (specifically, 13 µm), the particles did not adhere or bond well to each other in the solid-phase reaction, and a large amount of fine powder was mixed into the high Ni content lithium complex oxide. This led to enhanced reactivity at the solid-liquid interface and the formation of numerous films on the surface of the positive electrode active material. In addition, the reason for this is also thought to be that in Comparative Example 3 where nickel hydroxide had a BET specific surface area of more than 30 m²/g (specifically, 40 m²/g) and Comparative Example 4 where nickel hydroxide had a D₅₀ particle diameter of less than 2 µm (specifically, 1 µm), a large amount of fine powder remained in the resulting high Ni content lithium complex oxide. This led to enhanced reactivity at the solid-liquid interface and the formation of numerous films on the surface of the positive electrode active material.

In Comparative Example 1 where the ratio of the atomic weight of Ni to the total atomic weight of metal elements other than Li is less than 50 atm% (specifically, 45 atm%), the effects of the art disclosed herein was not able to be exhibited sufficiently.

It was shown that in contrast to these comparative examples, the rate of increase in the resistance after the cycles was relatively suppressed, and the cycle characteristics were improved in Examples 1 to 24 in which the ratio of the atomic weight of Ni to the total atomic weight of metal elements other than Li was 50 atm% or more, and in which the preparation step used nickel hydroxide having (1) a BET specific surface area of 10 to 30 m²/g and (2) a D₅₀ particle diameter of 2 to 10 µm,. Such results demonstrate the technical significance of the present disclosure disclosed herein.

Among them, in Examples 9 to 24 that used nickel hydroxide having (3) a mode diameter larger than the D₅₀ particle diameter in the preparation step, the rate of increase in the resistance after the cycles was suppressed to 200% or less. In addition, in Examples 12 to 20 and 24 that used, in the preparation step, nickel hydroxide having (4) a frequency of the mode diameter of 10 to 20 volume%, and (5) a ratio of the D₅₀ particle diameter to the D₂₀ particle diameter of 1.1 to 1.9, the rate of increase in the resistance after the cycles was suppressed to 180% or less. Furthermore, in Example 24 where the positive electrode active material was produced utilizing the spray granulation method, the rate of increase in the resistance after the cycles was suppressed to the lowest level.

As described above, the specific aspects of the art disclosed herein are those described in the following respective items.
Item 1: A manufacturing method for a positive electrode active material including a Ni-containing lithium complex oxide in which a ratio of an atomic weight of Ni to a total atomic weight of metal elements other than Li is 50 atm% or more, the manufacturing method comprising steps of: a preparation step of preparing a powdered nickel hydroxide as a Ni source, the powdered nickel hydroxide having a BET specific surface area of 10 m²/g or more and 30 m²/g or less based on a nitrogen adsorption method and a D₅₀ particle diameter of 2 µm or more and 10 µm or less, the D₅₀ particle diameter corresponding to a cumulative 50 volume% from a smallest particle diameter in a volume-based particle size distribution based on a laser diffraction and scattering method; and a reaction step of mixing and sintering at least the nickel hydroxide and a Li source to obtain the Ni-containing lithium complex oxide by a solid-phase reaction method.
Item 2: The manufacturing method according to item 1, wherein a mode diameter of the nickel hydroxide in the particle size distribution is larger than the D₅₀ particle diameter.
Item 3: The manufacturing method according to item 1 or 2, wherein in the particle size distribution of the nickel hydroxide, a frequency of a mode diameter is 10 volume% or more and 20 volume% or less, and a ratio (D₅₀ particle diameter/D₂₀ particle diameter) of the D₅₀ particle diameter to a D₂₀ particle diameter corresponding to a cumulative 20 volume% from the smallest particle diameter is 1.1 or more and 1.9 or less.
Item 4: The manufacturing method according to any one of items 1 to 3, wherein the reaction step includes: a mixture preparation step of dry-mixing at least the nickel hydroxide and the Li source to obtain a mixture; and a sintering step of sintering the mixture.
Item 5: The manufacturing method according to any one of items 1 to 3, wherein the reaction step includes: a slurry preparation step of dispersing at least the nickel hydroxide and the Li source in a solvent to prepare a slurry; a granulating step of spray-drying the slurry by a spray granulation method to obtain a granulated powder; and a sintering step of sintering the granulated powder.
Item 6: The manufacturing method according to any one of items 1 to 5, wherein the Ni-containing lithium complex oxide further contains a transition metal other than Ni, and the nickel hydroxide, a Li source, and a transition metal source other than Ni are mixed in the reaction step.
Item 7: A manufacturing method for a lithium ion secondary battery, including: a positive electrode production step of producing a positive electrode by using the positive electrode active material manufactured by the manufacturing method according to any one of items 1 to 6.

While the specific examples of the present disclosure have been described above in detail, these are illustrative only, and do not limit the scope of the claims. The art recited in the claims include various modifications and alternations of the specific examples exemplified above. In addition, a technical feature can be deleted as appropriate if that feature is not described as essential.

### [Reference Signs List]

- 20: Wound electrode body
- 30: Battery case
- 50: Positive electrode sheet (positive electrode)
- 54: Positive electrode active material layer
- 60: Negative electrode sheet (negative electrode)
- 64: Negative electrode active material layer
- 80: Nonaqueous electrolyte
- 100: Lithium ion secondary battery
- S1: Preparation step
- S2: Reaction step

## Claims

1. A manufacturing method for a positive electrode active material including a Ni-containing lithium complex oxide in which a ratio of an atomic weight of Ni to a total atomic weight of metal elements other than Li is 50 atm% or more, the manufacturing method comprising:
a preparation step (S1) of preparing powdered nickel hydroxide as a Ni source, the powdered nickel hydroxide having a BET specific surface area of 10 m²/g or more and 30 m²/g or less based on a nitrogen adsorption method and a D₅₀ particle diameter of 2 µm or more and 10 µm or less, the D₅₀ particle diameter corresponding to a cumulative 50 volume% from a smallest particle diameter in a volume-based particle size distribution based on a laser diffraction and scattering method; and
a reaction step (S2) of mixing and sintering at least the nickel hydroxide and a Li source to obtain the Ni-containing lithium complex oxide by a solid-phase reaction method.

2. The manufacturing method according to claim 1, wherein a mode diameter of the nickel hydroxide in the particle size distribution is larger than the D₅₀ particle diameter.

3. The manufacturing method according to claim 1 or 2, wherein
in the particle size distribution of the nickel hydroxide,
a frequency of a mode diameter is 10 volume% or more and 20 volume% or less, and
a ratio (D₅₀ particle diameter/D₂₀ particle diameter) of the D₅₀ particle diameter to a D₂₀ particle diameter corresponding to a cumulative 20 volume% from the smallest particle diameter is 1.1 or more and 1.9 or less.

4. The manufacturing method according to any one of claims 1 to 3, wherein the reaction step (S2) includes:
a mixture preparation step of dry-mixing at least the nickel hydroxide and the Li source to obtain a mixture; and
a sintering step of sintering the mixture.

5. The manufacturing method according to any one of claims 1 to 3, wherein the reaction step (S2) includes:
a slurry preparation step of dispersing at least the nickel hydroxide and the Li source in a solvent to prepare a slurry;
a granulating step of spray-drying the slurry by a spray granulation method to obtain a granulated powder; and
a sintering step of sintering the granulated powder.

6. The manufacturing method according to any one of claims 1 to 5, wherein
the Ni-containing lithium complex oxide further contains a transition metal other than Ni, and
the nickel hydroxide, a Li source, and a transition metal source other than Ni are mixed in the reaction step (S2).

7. A manufacturing method for a lithium ion secondary battery (100), comprising:
a positive electrode production step of producing a positive electrode (50) by using the positive electrode active material manufactured by the manufacturing method according to any one of claims 1 to 6.
